(19) **Europäisches Patentamt / European Patent Office / Office européen des brevets**

(11) **EP 1 540 913 B1**

(12) **EUROPEAN PATENT SPECIFICATION**

(45) Date of publication and mention
of the grant of the patent:
**18.06.2008 Bulletin 2008/25**

(51) Int Cl.:
*H04L 27/26* (2006.01)          *H04L 27/02* (2006.01)
*H04L 27/34* (2006.01)

(21) Application number: **03790614.6**

(22) Date of filing: **01.09.2003**

(86) International application number:
**PCT/CH2003/000594**

(87) International publication number:
**WO 2004/021661 (11.03.2004 Gazette 2004/11)**

(54) **MODULATION AND DEMODULATION OF A COMBINATION OF ANALOG AND DIGITAL SIGNALS**

MODULATION UND DEMODULATION EINER KOMBINATION ANALOGER UND DIGITALER
SIGNALE

MODULATION ET DEMODULATION D'UNE COMBINAISON DE SIGNAUX ANALOGIQUES ET
NUMERIQUES

(84) Designated Contracting States:
**AT BE BG CH CY CZ DE DK EE ES FI FR GB GR
HU IE IT LI LU MC NL PT RO SE SI SK TR**

(30) Priority: **30.08.2002 EP 02405742**

(43) Date of publication of application:
**15.06.2005 Bulletin 2005/24**

(73) Proprietor: **ABB Schweiz AG
5400 Baden (CH)**

(72) Inventors:
• **DZUNG, Dacfey
CH-5430 Wettingen (CH)**

• **HOFF, Thomas, Von
CH-8049 Zürich (CH)**
• **BENNINGER, Hans
CH-5300 Ennetturgi (CH)**
• **RAMSEIER, Stefan
CH-5416 Kirchdorf (CH)**

(74) Representative: **ABB Patent Attorneys
c/o ABB Schweiz AG,
Intellectual Property (CH-LC/IP),
Brown Boveri Strasse 6
5400 Baden (CH)**

(56) References cited:
**US-A- 5 444 697          US-A- 5 956 373
US-A- 5 956 624          US-B1- 6 430 227**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Field of the Invention

The invention relates to the field of digital communication. It relates to a method and a modem for modulating a combination of analog and digital signals, as described in the preamble of claim 1 and 6, respectively, and a method and a modem for demodulating a combination of analog and digital signals as described in the preamble of claim 4 and 9, respectively.

## Background of the Invention

A well-known technology for transmitting analog signals over high-frequency channels is a single side band (SSB) modulation, as described e.g. in Philip F. Panter, Modulation, Noise, and Spectral Analysis, Mc-Graw-Hill, 1965, pages 180-196. One type of SSB modulation is called Weaver SSB-modulation. Its main computational complexity lies in interpolation and in up- and downsampling stages.

For the transmission of digital data, single channel data transmission based on Quadrature Amplitude Modulation (QAM) or multi channel data transmission based on Orthogonal Frequency Division Multiplex (OFDM), also known as Discrete Multitone (DMT) modulation, are well-known flexible modulation schemes. Similarly, the main computational effort is invested in the up-/downsampling stages.

Some systems or applications may require the parallel transmission of SSB-modulated analog signals as well as QAM- or OFDM-modulated digital data, i.e. a hybrid operation mode. Such a hybrid transmission mode is required e.g. for broadband power line communication applications, where the analog signal typically is a speech signal. A straightforward parallel implementation and operation of known SSB and QAM/OFDM systems would result in a very high overall computational load in both a modulator or transmitter and a demodulator or receiver.

The patent US 5'956'373 discloses a transmitter and a receiver for transmitting or receiving a composite signal comprised of a QAM modulated digital signal and an AM modulated analog signal. It uses an adder for adding an in-phase component of the digital signal and the analog signal, and a common carrier frequency modulation part for modulating in-phase and quadrature components of the composite signal.

## Description of the Invention

It is therefore an object of the invention to create a method and a modem for modulating a combination of analog and digital signals and a method and a modem for demodulating a combination of analog and digital signals of the type mentioned initially, each having a reduced computational effort.

These objects are achieved by a method and a modem for modulating a combination of analog and digital signals, according to claim 1 and 6, respectively, and a method and a modem for demodulating a combination of analog and digital signals according to claim 4 and 9, respectively.

The inventive method for modulating a combination of analog and digital signals in which a digital data signal is modulated by means of quadrature amplitude modulation (QAM) or by means of Orthogonal Frequency Division Multiplex (OFDM) modulation and an analog signal is modulated by means of single side band modulation (SSB) comprises the steps of

- performing a singlecarrier or multicarrier base modulation of the digital data signal, generating an in-phase component and a quadrature component of the modulated digital signal,
- performing an SSB base modulation of an analog signal, generating an in-phase component and a quadrature component of the modulated analog signal,
- upsampling the components of at least one of the modulated digital and analog signal, thereby creating equisampled modulated digital and analog signals,
- adding corresponding components of the equisampled modulated digital and analog signals, and
- performing a carrier frequency modulation of the added components, adding the carrier frequency modulated components and transmitting the resulting sum signal.

The inventive method for demodulating a combination of analog and digital signals in which a received carrier frequency modulated signal is demodulated by means of singlecarrier quadrature amplitude demodulation or by means of multicarrier orthogonal frequency division multiplex demodulation and an analog signal is demodulated by means of single side band demodulation comprises the steps of

- performing a carrier frequency demodulation of the received signal, with orthogonal carrier signals, generating in-phase and quadrature components of the received signal,
- performing an SSB base demodulation of the in-phase and quadrature components of the received signal, generating a reconstructed analog signal, and
- performing a singlecarrier or multicarrier quadrature amplitude base demodulation of the in-phase and quadrature components of the received signal, generating a reconstructed digital signal.

The invention reduces the total computational effort for modulating the digital and analog signals by performing the carrier frequency modulation or demodulation only once for both signals.

In a preferred variant of the invention, the in-phase component and the quadrature component of the modulated analog or digital signal(s) are moved, i.e. shifted in frequency, to a respective offset frequency relative to a common carrier frequency. This allows to position the frequency band allocated to the transmission of the modulated analog signal to an arbitrary position with respect to the frequency band allocated to the transmission of the modulated digital signal. In particular, this allows to combine more than one modulated analog signal with more than one modulated digital signal, with each modulated signal having an associated frequency band different from the other ones.

The inventive modem comprises means for carrying out the inventive method for the modulation and/or for the demodulation of combined digital and analog signals.

Further preferred embodiments are evident from the dependent patent claims.

**Brief Description of the Drawings**

The subject matter of the invention will be explained in more detail in the following text with reference to preferred exemplary embodiments which are illustrated in the attached drawings, in which:

Figure 1    shows a spectrum of a transmitted carrier frequency modulated signal;
Figure 2    is a block diagram of a transmitter according to the invention;
Figure 3    is a block diagram of a receiver according to the invention.

The reference symbols used in the drawings, and their meanings, are listed in summary form in the list of designations. In principle, identical parts are provided with the same reference symbols in the figures.

**Detailed Description of Preferred Embodiments**

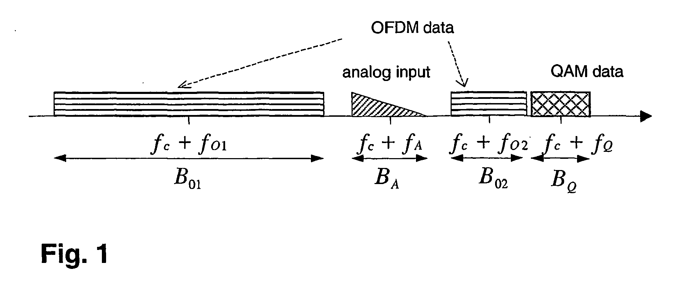

Figure 1 shows a spectrum of a transmitted carrier frequency modulated signal. An available transmission spectrum, indicated by its carrier frequency $f_c$ is shared between three modulated digital data signals and a modulated analog signal. The analog signal $A_1$ typically represents a voice communication channel. The modulated analog signal occupies a frequency band with bandwidth $B_A$ and a middle frequency $f_c + f_A$, where $f_A$ is a frequency offset between the carrier frequency $f_c$ and the middle frequency.

A first digital signal $D_1$ is modulated according to the OFDM scheme, the assigned subchannels occupy a bandwidth $B_{O1}$ centered around the middle frequency $f_c + f_{O1}$, where $f_{O1}$ is a frequency offset between the carrier frequency $f_c$ and the middle frequency. Similarly, a second digital signal is modulated onto subchannels centered around the middle frequency $f_c + f_{O2}$. The assigned subchannels occupy a bandwidth $B_{O2}$. A third digital signal $D_2$ is modulated according to the QAM scheme onto a singlecarrier at frequency $f_c + f_Q$, the bandwidth occupied thereby is denoted $B_Q$ and comprises side lobes as well.

In order to optimize the usage of the available total bandwidth, a single OFDM modulated digital signal may occupy the totality of the available transmission spectrum with the exception of the bands occupied by other modulated analog or singlecarrier digital signals. As described in EP1164762, this is done by configuring subcarrier signals of the OFDM modulation such that the spectrum of the OFDM signal does not interfere with the band reserved for the other signals, i.e. no data is mapped to those subcarriers of the OFDM signal that would interfere with the bands reserved for the other signals.

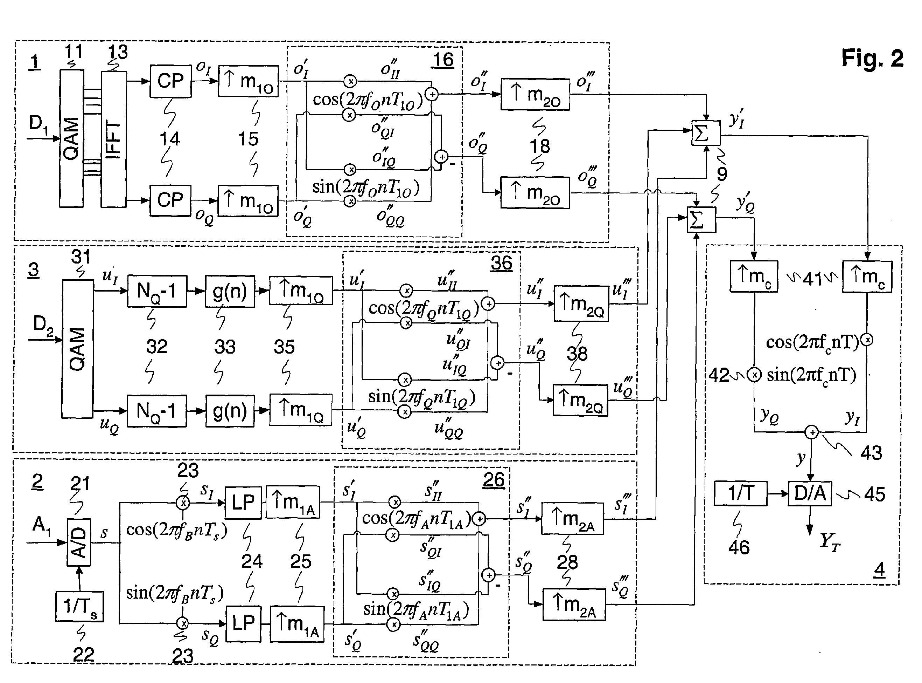

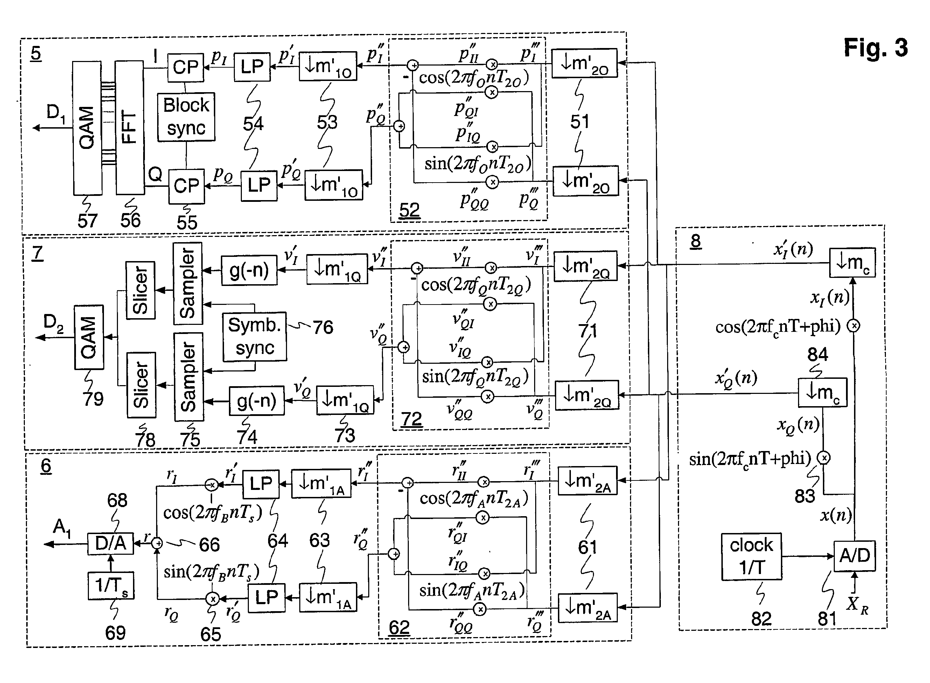

According to the invention, both analog $A_1$ and digital $D_1,D_2$ payload signals are modulated or demodulated with the same carrier frequency (CF) modulator 4 or carrier frequency demodulator 8, respectively (cf. Fig. 2 and Fig.3 below). Before being modulated by the carrier frequency modulator 4, the digital signal $D_1$ is modulated by a multicarrier quadrature amplitude base modulator 1, the digital signal $D_2$ is modulated by a singlecarrier quadrature amplitude base modulator 3 and the analog signal $A_1$ is modulated by an SSB base modulator 2. The various modulated base-band signals created thereby are real-valued low-pass signals. In general, the remaining part of the transmission signal generation consists of interpolation and modulation to the different carrier-frequencies. Since the frequency bands of the various signals are in the same range, part of this interpolation and modulation can be shared improving the computational efficiency compared to separate treatment. Hence, at least one of the base modulators 1,2,3 comprises an upsampling stage for ensuring that the various modulated base-band signals are equisampled or adjusted, i.e. have the same sampling rates. These equisampled modulated signals are added and finally undergo modulation with a common carrier frequency.

In the following the modulation is described for an OFDM signal with a carrier frequency $f_c+f_O$, for a singlecarrier QAM signal with a carrier frequency $f_c+f_Q$, and an analog signal with a carrier frequency $f_c+f_A$. To make interpolation and modulation efficient, modulation by the carrier frequencies is performed in two steps applying the addition theorem for the trigonometric functions sin and cos:

$$\cos(\alpha + \beta) = \cos\alpha\cos\beta - \sin\alpha\sin\beta$$

$$\sin(\alpha + \beta) = \cos\alpha\sin\beta + \sin\alpha\cos\beta$$

In order to share a common modulation step, the signals are modulated by $f_O$, $f_Q$, or $f_A$ in a first step. The interpolation steps before and after the first modulation step are carefully chosen such that the sampling theorem is satisfied.

The inventive demodulation is accomplished in an analog fashion, resulting in an OFDM, QAM and SSB demodulation having a common carrier frequency demodulator 8.

Figure 2 shows a block diagram of a transmitter according to the invention, illustrating the three procedures of signal preparation. In the Figure, the bracketed $n$ as e.g. in $o_1(n)$, $o'_1(n)$ denotes that the respective signal is time-discrete, with $n$ as a counting variable. For simplicity of representation, the same symbol $n$ is used for all signals, but during operation, due to the up- or downsampling steps, the respective counters for $n$ for signals with different sampling rates shall count with different rates. In the following text, however, the symbol n has been omitted altogether.

A digital implementation of the OFDM modulation method is used, in which in a OFDM base modulator 1 a QAM vectoriser 11 generates a vector of frequency coefficients in accordance with parallelised digital input bits from the digital input signal $D_1$. From the vector of frequency coefficients, an inverse fast fourier transform 13 generates an in-phase component I and an orthogonal quadrature component Q. In block 14, each of said components is padded with a cyclic prefix and, additionally, pre- and postpadded with cyclical samples that are weighted to perform pulse-shaping, resulting in two real-valued sequences, at sampling rate $1/To$, of in-phase component $o_1(n)$ and a quadrature component $o_Q(n)$ of the modulated digital signal.

In order to prepare the OFDM signal for a frequency shift, the components are upsampled by factor $m_{1O}$ by the upsampler 15, where

$$m_{1O} > (2f_O + B_O)T_O$$

must be satisfied to fulfill the sampling theorem in the next modulation step. Furthermore, $m_{1O}$ is a factor of $T_O/T$, since the following relation between the sampling rate $1/T_O$ and the ultimate sampling time $T$ of the transmitted signal (see below) is established by the intervening upsampling steps:

$$T_O/T = m_{1O} \cdot m_{2O} \cdot m_C$$

The up-sampled versions of $o_I$ and $o_Q$ are denoted $o_I'$ and $o_Q'$, respectively.

In the next modulation step, in an OFDM modulator frequency shifter 16, the mid-frequencies of the spectrum of $o_I'$ and $o_Q'$ are moved to $\pm f_O$.

$$o''_{II} = o'_I \cdot \cos(2\pi f_O n T_{1O})$$

$$o''_{IQ} = o'_I \cdot \sin(2\pi f_O n T_{1O})$$

$$o''_{QI} = o'_Q \cdot \cos(2\pi f_O n T_{1O})$$

$$o''_{QQ} = o'_Q \cdot \sin(2\pi f_O n T_{1O})$$

where $T_{1O} = T_O/m_{1O}$. The sum of $o''_{II}$ and $o''_{QQ}$ builds the signal $o''_I$ and the difference between $o''_{QI}$ and $o''_{IQ}$ the signal $o''_Q$.

$$o''_I = o''_{II} + o''_{QQ}$$

$$o''_Q = o''_{QI} - o''_{IQ}$$

Finally, QAM upsamplers 18 generate corresponding I and Q components $o'''_I(n)$, $o'''_Q(n)$ with higher sampling rates as required for the ultimate summation of the different components (see below). An upsampler is implemented e.g. by the insertion of additional sampling points followed by low pass filtering.

A second digital signal $D_2$ is prosecuted in a quadrature amplitude base modulator 3 as follows. The singlecarrier QAM data stream u(n) resulting from QAM mapper 31 is a complex discrete-time sequence with symbol rate $1/T_Q$. For further processing, the complex signal is represented as two real-valued sequences $u_I(n)$ and $u_Q(n)$ containing the in-phase and the quadrature component, respectively. These sequences are stuffed with $N_Q$ - 1 zeros in a zero stuffer 32 and filtered by the pulse shape g(n) in a pulse shaper 33. The resulting signal has sampling rate $1/(N_Q T_Q)$.

To have a sufficient side-lobe attenuation, a frequency band with bandwidth $B_Q$, say $B_Q = 4/T_Q$ is reserved for the QAM signal. The singlecarrier QAM signal is up-sampled by factor $m_{1Q}$ in first QAM upsamplers 35, where

$$m_{1Q} > (2f_Q + B_Q)T_Q / N_Q$$

must be satisfied to fulfil the sampling theorem in the next modulation step. Furthermore, $m_{1Q}$ is a factor of $T_Q/(N_Q T)$. The up-sampled versions of $u_I$ and $u_Q$ are $u_I'$ and $u_Q'$, respectively.

In the next modulation step, in an QAM modulator frequency shifter 36, the mid-frequencies of the spectrum of $u_I'$ and $u_Q'$ are moved to $\pm f_Q$.

$$u_{II}'' = u_I' \cdot \cos(2\pi f_Q n T_{1Q})$$

$$u_{IQ}'' = u_I' \cdot \sin(2\pi f_Q n T_{1Q})$$

$$u_{QI}'' = u_Q' \cdot \cos(2\pi f_Q n T_{1Q})$$

$$u_{QQ}'' = u_Q' \cdot \sin(2\pi f_Q n T_{1Q})$$

where $T_{1Q} = T_Q/N_Q m_{1Q}$. The sum of $u_{II}''$ and $u_{QQ}''$ builds the signal $u_I''$ and the difference between $u_{QI}''$ and $u_{IQ}''$ the signal $u_Q''$.

$$u_I'' = u_{II}'' + u_{QQ}''$$

$$u_Q'' = u_{QI}'' - u_{IQ}''$$

In a SSB base modulator 3 the <u>analog input</u> $A_1$ is sampled with a modulator A/D converter 21 with a sampling time $T_s$ generated by a modulator A/D converter clock 22. A digital implementation of Weaver's method for SSB modulation is extended in the following, as part of the present invention: To perform an efficient band pass filtering (with lower and upper cut-off frequencies $f_u$ and $f_o$), the sampled signal $s(n)$ is treated in SSB modulator multipliers 23 with a cos-modulator

$$s_I(n) = s(n) \cdot \cos(2\pi f_B n T_s)$$

and a sin-modulator

$$s_Q(n) = s(n) \cdot \sin(2\pi f_B n T_s),$$

respectively, where $f_B = (f_u + f_o)/2$ is the mid-frequency of the desired band of the analog input (with $f_B \ll f_C$), and $B_A = (f_o - f_u)$ is the corresponding bandwidth. The modulations locate the desired band of the analog input symmetrically around 0 Hz, ranging from $-(f_o + f_u)/2$ to $(f_o - f_u)/2$. This allows to implement a band-pass filtering of the original signal $s(n)$ in the form of low-pass filters with cut-off frequency $(f_o - f_u)/2$, implemented in SSB modulator low pass filters 24.

Both filtered signals $s_I$ and $s_Q$, are now upsampled, in first SSB modulator upsamplers 25, by a factor $m_{1A}$, where

$$m_{1A} > 2(f_A + (f_o - f_u)/2)T_s$$

must be satisfied to fulfil the sampling theorem in the next modulation step. Furthermore, $m_{1A}$ is a factor of $T_s/T$, since the following relation between the analog sampling time $T_s$ and the final carrier frequency $f_c$ is established by the intervening upsampling steps (see below):

$$T_s/T = m_{1A} \cdot m_{2A} \cdot m_C$$

The up-sampled versions of $s_I$ and $s_Q$ are denoted $s_I'$ and $s_Q'$, respectively.

In a next modulation step, in an SSB modulator frequency shifter 26, the mid-frequencies of the spectrum of $s_I'$ and $s_Q'$ are moved to an offset frequency $\pm f_A$.

$$s_{II}'' = s_I' \cdot \cos(2\pi f_A n T_{1A})$$

$$s_{IQ}'' = s_I' \cdot \sin(2\pi f_A n T_{1A})$$

$$s_{QI}'' = s_Q' \cdot \cos(2\pi f_A n T_{1A})$$

$$s_{QQ}'' = s_Q' \cdot \sin(2\pi f_A n T_{1A})$$

where $T_{1A} = T_s/m_{1A}$. The sum of $s_{II}''$ and $s_{QQ}''$ builds the signal $s_I''$ and the difference between $s_{QI}''$ and $s_{IQ}''$ the signal $s_Q''$.

$$s_I'' = s_{II}'' + s_{QQ}''$$

$$s''_Q = s''_{QI} - s''_{IQ}$$

In a preferred embodiment of the invention, $f_A$ = 0, i.e. the complete SSB modulation as implemented in the SSB base modulator 2 in conjunction with the carrier frequency modulator 4 corresponds to Weaver's method.

To adjust the sampling rates of the modulated analog data $s''_I$ and $s''_Q$ with those of the OFDM signals $o''_I$ and $o''_Q$ and/or the singlecarrier QAM signals $u''_I$ and $u''_Q$, one of them or all are upsampled. The analog input is up-sampled in optional second SSB modulator upsamplers 28 by $m_{2A}$, the OFDM data in optional QAM upsamplers 18 by $m_{2O}$, and the singlecarrier QAM signal by $m_{2Q}$ in the optional upsampler 38, yielding the equisampled signals $s'''_I, s'''_Q, u'''_I, u'''_Q, o'''_I$ and $o'''_Q$, respectively. If all signal pairs are upsampled, this is done preferably with upsampling rates that do not have any factors in common. In a preferred embodiment of the invention, either $m_{2A}$ or one of $m_{2O}$ or $m_{2Q}$ is equal to one, i.e. the respective upsampling step is omitted. Similarly, the upsampling rate $m_{1A}$ of the first SSB modulator upsamplers 25 is adjusted or set to one, subject to the inequality given above and by adjusting the other upsampling rates such that the input and output sampling rates of the multicarrier or singlecarrier quadrature amplitude base modulator 1,3, SSB base modulator 2 and carrier frequency modulator 4 match. In a preferred embodiment of the invention, the sampling rates are chosen such that computationally expensive operations such as for narrow or steep filters like the SSB modulator low pass filters 24 are executed for signals with low sampling rates.

In a carrier frequency modulator 4 the I- and the Q-parts of the modulated analog input, the OFDM signal and/or the singlecarrier QAM signal are summed in adders 9 and then undergo upsampling, interpolation and modulation with the final carrier frequency $f_C$ *in a common procedure.* In detail, the respective sums $y'_I$ and $y'_Q$,

$$y'_I = o'''_I + u'''_I + s'''_I$$

$$y'_Q = o'''_Q + u'''_Q + s'''_Q$$

are upsampled by a factor $m_c = (T_S/T)/(m_{1A}m_{2A})$ and interpolated in CF modulator upsamplers 41, and modulated with the carrier frequency $f_c$ in CF modulator multipliers 42 by $\cos(2\pi f_c nT)$ and $\sin(2\pi f_c nT)$, respectively. The resulting signals, $y_I$ and $y_Q$, are summed up in an adder 43 to build the transmitted signal $y = y_I + y_Q$, which is then converted in a modulator D/A converter 45 driven by a modulator D/A converter clock 46 to an analog signal $Y_T$ for amplification and transmission.

In a preferred embodiment of the invention, the analog SSB, the digital OFDM and/or the digital singlecarrier QAM branches are amplified or multiplied separately by different constant factors before being summed in the adder 9, according to a desired approportionment of total transmission power.

Figure 3 shows a block diagram of a receiver according to the invention: In a carrier frequency demodulator 8, the received analog signal $X_R$ is converted, in a demodulator A/D converter 81 driven by a demodulator A/D converter clock 82, to a digital signal x(n). The signal x(n) is, by CF demodulator multipliers 83 treated with a cos-modulator

$$x_I(n) = x(n) \cdot \cos(2\pi f_c nT + phi)$$

and in parallel with a sin-modulator

$$x_Q(n) = x(n) \cdot \sin(2\pi f_c nT + phi)$$

to generate the I- and Q- parts of the received signal in the base band. Both $x_I(n)$ and $x_Q(n)$ are down sampled in CF demodulator downsamplers 84. Downsampling is achieved by first low pass filtering and then sampling a signal. For downsampling, a factor

$$m_c = T_s/T/(m'_{1A}m'_{2A})$$ is used, resulting in signals

$x'_I(n)$ and $x'_Q(n)$, which contain contributions from both digital and SSB modulated analog data. The digital data may contain QAM data streams and OFDM data streams. From this point on, the received signal is processed separately by different receivers or base demodulators 5,6,7.

The receiver or multicarrier quadrature amplitude base demodulator 5 for the <u>OFDM data</u> downsamples the signals $x'_I(n)$ and $x'_Q(n)$ with OFDM downsamplers 51 by a factor $m'_{20}$, if $m'_{20} > 1$, yielding $p''_I(n)$ and $p''_Q(n)$. Both $p''_I(n)$ and $p''_Q(n)$ are modulated each in an OFDM demodulator frequency shifter 52 by a cos- and a sin-modulator with frequency $f_o$, yielding

$$p''_{II} = p'''_I \cdot \cos(2\pi f_o n T_{2o})$$

$$p''_{IQ} = p'''_I \cdot \sin(2\pi f_o n T_{2o})$$

$$p''_{QI} = p'''_Q \cdot \cos(2\pi f_o n T_{2o})$$

$$p''_{QQ} = p'''_Q \cdot \sin(2\pi f_o n T_{2o})$$

which are then superposed to build signals $p''_I(n)$ and $p''_Q(n)$:

$$p''_I = p''_{II} - p''_{QQ}$$

$$p''_Q = p''_{IQ} + p''_{QI}$$

$p''_I(n)$ and $p''_Q(n)$ are downsampled in second OFDM demodulator downsamplers 53 by a factor $m'_{1o}$ and low-pass filtered in OFDM demodulator low pass filters 54 with cut-off frequency $B_o$ to isolate the OFDM signal and to remove the QAM- and analog-data carriers. From the resulting signals $p_I(n)$ and $p_Q(n)$, the cyclic prefix and the pre- and postpadded pulse-shaping samples are removed in cyclic prefix remover 55, in a fast fourier transformer 56 the vector of frequency coefficients is determined, and in a QAM serialiser 57 reconstructed data bits $D_1$ are determined and output.

The receiver or singlecarrier quadrature amplitude base demodulator 7 for the QAM data downsamples the signals $x'_I(n)$ and $x'_Q(n)$ with QAM downsamplers 71 by a factor $m'_{2Q}$, if $m'_{2Q} > 1$, yielding $v'''_I(n)$ and $v'''_Q(n)$. Both $v'''_I(n)$ and $v'''_Q(n)$ are modulated each in a QAM demodulator frequency shifter 72 by a cos- and a sin-modulator with frequency $f_Q$, yielding

$$v''_{II} = v'''_I \cdot \cos(2\pi f_Q n T_{2Q})$$

$$v''_{IQ} = v'''_I \cdot \sin(2\pi f_Q n T_{2Q})$$

$$v''_{QI} = v'''_Q \cdot \cos(2\pi f_Q n T_{2Q})$$

$$v''_{QQ} = v'''_Q \cdot \sin(2\pi f_Q n T_{2Q})$$

which are then superposed to build signals $v''_I(n)$ and $v''_Q(n)$:

$$v''_I = v''_{II} - v''_{QQ}$$

$$v''_Q = v''_{IQ} + v''_{QI}$$

$v''_I(n)$ and $v''_Q(n)$ are down sampled in second QAM demodulator downsamplers 73 by a factor $m'_{1Q}$ yielding the signals $v'_I(n)$ and $v'_Q(n)$. The latter are subsequently treated in matched filters 74, symbol samplers 75, Equalizers 77, Slicers 78 and QAM demapper 79 in a way known in the art and detailed e.g. in John G. Proakis, "Digital Communication", McGraw-Hill 1983, pages 1 83-190.

The SSB receiver or base demodulator 6 for the analog signal down samples the signals $x'_I(n)$ and $x'_Q(n)$ in first SSB demodulator downsamplers 61 by $m'_{2A}$, if $m'_{2A} > 1$, yielding $r'''_I(n)$ and $r'''_Q(n)$. Both $r'''_I(n)$ and $r'''_Q(n)$ are modulated each in an SSB demodulator frequency shifter 62 by a cos- and a sin-modulator with frequency $f_A$, yielding

$$r''_{II} = r'''_I \cdot \cos(2\pi f_A n T_{2A})$$

$$r''_{IQ} = r'''_I \cdot \sin(2\pi f_A n T_{2A})$$

$$r''_{QI} = r'''_Q \cdot \cos(2\pi f_A n T_{2A})$$

$$r''_{QQ} = r'''_Q \cdot \sin(2\pi f_A n T_{2A})$$

which are then superposed to build signals $r''_I(n)$ and $r''_Q(n)$:

$$r''_I = r''_{II} - r''_{QQ}$$

$$r''_Q = r''_{IQ} + r''_{QI}$$

$r''_I(n)$ and $r''_Q(n)$ are down sampled in second SSB demodulator downsamplers 63 by a factor $m'_{1A}$ and low-pass filtered in SSB demodulator low pass filters 64 with cut-off frequency $f_B$ to remove the QAM- and OFDM-data carriers. This yields signals $r'_I(n)$ and $r'_Q(n)$, which are treated in SSB demodulator multipliers 65 with the corresponding cos- and sin-modulator, respectively:

$$r_I(n) = r'_I(n) \cdot \cos(2\pi f_B n T_S)$$

$$r_Q(n) = r'_Q(n) \cdot \sin(2\pi f_B n T_S)$$

The sum of those signals $r(n)=r_I(n)+r_Q(n)$ is computed by an adder 66 and then converted in a demodulator D/A converter 68, driven by a demodulator D/A converter clock 69, to the analog output signal $A_1$.

As in the modulator, downsampling rates are chosen such that an overall computational load is reduced, and preferably setting one or more of the downsampling rates $m'_{1A}, m'_{2A}, m'_{1Q}, m'_{2Q}, m'_{1O}, m'_{2O}, m_c$ to one. The downsampling factors are chosen such that the Nyquist theorem is satisfied. The downsampling rates can, but must not necessarily be equal to corresponding upsampling rates.

In summary, the SSB modulation of a real-valued analog signal, the complex-valued singlecarrier quadrature amplitude modulation and the multicarrier orthogonal frequency division multiplex modulation of digital data can be efficiently combined by sharing interpolation/decimation filters as well as the modulation/demodulation step in the high frequency range. This results in a large reduction of the total computational complexity compared with a system consisting of separate implementations.

The bandwidth and the offset of the analog signal with respect to a band occupied by a digital signal can be chosen by having the offset frequency $f_A$ differ from zero, i.e. the central frequency of the modulated digitized analog signal must not be identical with the carrier frequency. In a preferred embodiment of the invention, the modulated analog signal occupies a band at the upper or lower end of the available transmission spectrum. As a result, only one boundary with respect to the modulated digital signal exists, reducing filter requirements for separating the two modulated signals. In another preferred embodiment of the invention, the modulated analog signal is located at a frequency location where associated channel characteristics are suited for the transmission of analog data, in particular for voice transmission.

In another preferred embodiment of the invention, there is more than one analog signal to be transmitted. According to the number of analog signals, a corresponding number of SSB base modulators 2 and the SSB base demodulators 7 is realized in parallel. Frequency offsets $f_A$ of these plural SSB base modulators 2 are set to different values and the carrier configuration and filtering of the digital signal processing is adjusted accordingly. In a transmitter, the outputs of additional SSB base modulators 2 are added by the adder 9.

In another preferred embodiment of the invention, there is more than one digital signal to be transmitted. According to the number of digital signals, a corresponding number of OFDM base modulators 1 and/or QAM base modulators 3 as well as OFDM base demodulators 5 and/or QAM base modulators 7 is realized in parallel. Frequency offsets $(f_O, f_Q)$ of these plural OFDM / QAM base modulators are set to different values and the carrier configuration and filtering of the other digital and analog signal processings are adjusted accordingly. In a transmitter, the outputs of additional OFDM and/or QAM base modulators are added by the adder 9.

By way of example, the following frequencies and sample rates are given:

- carrier frequency $f_c$: 800 kHz
- upsampling rate $m_c$ of the CF modulator upsamplers 41 = 32
- sampling rate of the modulated signals at the adder 9: 64 kHz
- sampling frequency of the modulator A/D converter 21 : $1/T_s$ = 8 kHz
- mid frequency of analog input signal $f_B$= 850 Hz
- Bandwidth of analog signal $B_A$= 2 kHz
- upsampling rate $m_{1A}$ of the first SSB modulator upsamplers 25: 8
- intermediate sampling time $T_{1A}$ = (1/64) ms
- upsampling rate $m_{2A}$ of the second SSB modulator upsamplers 28: 1
- frequency offset of the modulated analog signal $f_A$ = -14.85 kHz
- bandwidth of OFDM band $B_o$ = 8 kHz
- upsampling rate $m_{1O}$ of the OFDM upsamplers 15: 4
- intermediate sampling time $T_{1O}$ = (1/32) ms
- upsampling rate $m_{2O}$ of the second OFDM upsamplers 18: 2

- frequency offset of the modulated OFDM signal $f_O$ = 8 kHz
- bandwidth of QAM band $B_Q$ = 5.33 kHz
- sampling frequency at device 31 : $1/T_Q$ = 2.66 kHz
- zero stuffing factor $N_Q$ = 12
- upsampling rate $m_{1Q}$ of the QAM upsamplers 35: 1
- intermediate sampling time $T_{1Q}$ = (1/32) ms
- upsampling rate $m_{2Q}$ of the second QAM upsamplers 38: 2
- frequency offset of the modulated QAM signal $f_Q$ = -11 kHz

The transmitter and receiver are implemented with known devices and technologies for digital signal processing such as one or more programmable microprocessors, digital signal processors, ASIC's, FPGA's, discrete devices etc...

**List of designations**

| 1 | multicarrier quadrature amplitude (OFDM) base modulator |
|---|---|
| 2 | SSB base modulator |
| 3 | single carrier quadrature amplitude base modulator |
| 4 | carrier frequency (CF) modulator |
| 5 | multicarrier quadrature amplitude (OFDM) base demodulator |
| 6 | SSB base demodulator |
| 7 | single carrier quadrature amplitude base demodulator |
| 8 | carrier frequency demodulator |
| 9 | adder, adding means |
| 11 | OFDM vectoriser |
| 13 | inverse fast fourier transform (IFFT) |
| 14 | cyclic prefix, windowing |
| 15 | first OFDM modulator upsamplers |
| 16 | OFDM modulator frequency shifter |
| 18 | second OFDM modulator upsamplers |
| 21 | modulator analog to digital (A/D) converter |
| 22 | modulator A/D converter clock |
| 23 | SSB modulator multipliers |
| 24 | SSB modulator low pass filters |
| 25 | first SSB modulator upsamplers |
| 26 | SSB modulator frequency shifter |
| 28 | second SSB modulator upsamplers |
| 31 | QAM mapper |
| 32 | zero stuffer |
| 33 | pulse shaper |
| 35 | first QAM upsamplers |
| 36 | QAM modulator frequency shifter |
| 38 | second QAM upsamplers |
| 41 | CF modulator upsamplers |
| 42 | CF modulator multipliers |
| 43 | adder |
| 45 | modulator digital to analog (D/A) converter |

| 46 | modulator D/A converter clock |
|---|---|
| 51 | first OFDM demodulator downsamplers |
| 52 | OFDM demodulator frequency shifter |
| 53 | second OFDM demodulator downsamplers |
| 54 | OFDM demodulator low pass filters |
| 55 | cyclic prefix remover |
| 56 | fast fourier transformer (FFT) |
| 57 | OFDM demodulator serialiser |
| 61 | first SSB demodulator downsamplers |
| 62 | SSB demodulator frequency shifter |
| 63 | second SSB demodulator downsamplers |
| 64 | SSB demodulator low pass filters |
| 65 | SSB demodulator multipliers |
| 66 | adder |
| 68 | demodulator digital to analog (D/A) converter |
| 69 | demodulator D/A converter clock |
| 71 | first quadrature amplitude demodulator downsamplers |
| 72 | quadrature amplitude demodulator frequency shifter |
| 73 | second quadrature amplitude demodulator downsamplers |
| 74 | anti pulse shaper |
| 75 | symbol serialiser |
| 76 | symbol synchronizer |
| 77 | equalizer |
| 78 | slicer |
| 79 | QAM demapper |
| 81 | demodulator analog to digital (A/D) converter |
| 82 | demodulator A/D converter clock |
| 83 | CF demodulator multipliers |
| 84 | CF demodulator downsamplers |

**Claims**

1. A method for modulating a combination of analog and digital signals in which a digital data signal (D) is modulated by means of singlecarrier Quadrature Amplitude Modulation (QAM) or multicarrier Orthogonal Frequency Division Multiplex Modulation (OFDM) and an analog signal (A) is modulated by means of single side band modulation (SSB), **characterized in that** the method comprises the steps of

   a) performing a singlecarrier or multicarrier base modulation of the digital data signal (D), generating an in-phase component ($u_i$;$o_I$) and a quadrature component $(u_Q;o_Q)$ of the modulated digital signal,
   b) performing an SSB base modulation of the analog signal (A), generating an in-phase component ($s_I$) and a quadrature component ($s_Q$) of the modulated analog signal,
   c) upsampling the components of at least one of the modulated digital and analog signal, generating equisampled in-phase

$(u_I''';\ o_I''';\ s_I''')$ and quadrature

$(u_Q''';\ o_Q''';\ s_Q''')$ components with adjusted sampling rates,

d) adding corresponding equisampled components of the modulated digital and analog signals, generating an added in-phase component

$(y_I')$ and an added quadrature component

$(y_Q')$, and

e) performing a carrier frequency modulation of the added components $(y_I',\ y_Q')$, adding the carrier frequency modulated components ($y_I$, $y_Q$) and transmitting the resulting sum signal ($Y_T$).

2. The method according to claim 1, wherein prior to the generation of the equisampled components, frequency-shifted in-phase components

$(u_I'',o_I'',s_I'')$ and quadrature components

$(u_Q'',o_Q'',s_Q'')$ are created by moving the modulated digital and analog signals to a respective offset frequency ($f_A$, $f_O$, $f_Q$).

3. The method according to claim 2, wherein more that one analog signal is modulated by an SSB base modulation, and/or more than one digital signal ($D_1$, $D_2$) is modulated by a singlecarrier QAM or a multicarrier OFDM base modulation, and wherein the in-phase components and the quadrature components of each modulated analog and digital signal are moved to an offset frequency associated with the corresponding analog or digital signal.

4. A method for demodulating a combination of analog and digital signals in which a received carrier frequency modulated signal ($X_R$) is demodulated by means of singlecarrier Quadrature Amplitude Modulation (QAM) or multicarrier Orthogonal Frequency Division Multiplex Modulation (OFDM) and by means of single side band demodulation (SSB), **characterized in that** the method comprises the steps of

a) performing a carrier frequency demodulation of the received signal ($X_R$), with orthogonal carrier signals, generating in-phase $(x_I'(n))$ and quadrature $(x_Q'(n))$ components of the received signal,

b) downsampling the in-phase $(x_I(n))$ and quadrature $(x_Q'(n))$ components of the received signal, generating downsampled in-phase $(v_I'''(n);\ p_I'''(n);\ r_I'''(n))$ and quadrature $(v_Q'''(n);\ p_Q'''(n);\ r_Q'''(n))$ components,

c) performing an SSB base demodulation of the downsampled in-phase $(r_I'''(n))$ and quadrature $(r_Q'''(n))$ components, generating a reconstructed analog signal (A), and

d) performing a singlecarrier quadrature amplitude base demodulation or a multicarrier Orthogonal Frequency Division Multiplex base demodulation of the downsampled in-phase $(v_I'''(n);\ p_I'''(n))$ and quadrature $(v_Q'''(n);\ p_Q'''(n))$ components, generating a reconstructed digital signal (D).

5. The method according to claim 4, wherein the SSB base demodulation comprises moving the downsampled in-phase $(r_I'''(n))$ and quadrature $(r_Q'''(n))$ components by an offset frequency ($f_A$).

6. A modem for modulating a combination of analog and digital signals in which a digital data signal (D) is modulatable by means of multicarrier Orthogonal Frequency Division Multiplex Modulation (OFDM) or by means of singlecarrier quadrature amplitude modulation (QAM) and an analog signal (A) is modulatable by means of single side band modulation (SSB), **characterized in that** the modem comprises

a) means (1,3) for performing a singlecarrier or multicarrier quadrature amplitude base modulation of the digital data signal (D) and for generating an in-phase component $(u_I\ ;\ o_I)$ and a quadrature component ($u_Q;o_Q$) of the modulated digital signal,

b) means (2) for performing an SSB base modulation of the analog signal (A) and for generating an in-phase component ($s_I$) and a quadrature component ($s_Q$) of the modulated analog signal,

c) means (18,28,38) for upsampling the components of at least one of the modulated digital and analog signal and for generating equisampled

in-phase $(u_I'''; \ o_I''; \ s_I''')$ and quadrature $(u_Q'''; \ o_Q''; \ s_Q''')$ components with adjusted sampling rates,

d) means (9) for adding corresponding equisampled components of the modulated digital and analog signals, and for generating an added in-phase component $(y_I')$ and an added quadrature component $(y_Q')$,

e) means (4) for performing a carrier frequency modulation of the added components $(y_I', y_Q')$, for adding the carrier frequency modulated components $(y_I, y_Q)$ and for transmitting the resulting sum signal $(Y_T)$.

7. The modem according to claim 6, comprising means (16,26,36) for creating frequency-shifted in-phase components $(u_I'', o_I'', s_I'')$ and quadrature components $(u_Q'', o_Q'', s_Q'')$ by moving the modulated digital and analog signals to a respective offset frequency $(f_A, f_O, f_Q)$.

8. The modem according to claim 6, comprising more than one means (1,3) for performing a singlecarrier QAM or a multicarrier OFDM base modulation for modulating more than one digital signal $(D_1, D_2)$ and/or comprising more than one means (2) for performing an SSB base modulation for modulating more than one analog signal (A), and comprising for each modulated analog and digital signal a means (16,26,36) for creating frequency-shifted in-phase components and quadrature components.

9. A modem for demodulating a combination of analog and digital signals, received as a carrier frequency modulated signal $(X_R)$ in which a digital data signal (D) is demodulatable by means of multicarrier orthogonal frequency division multiplex demodulation (OFDM) or by means of singlecarrier quadrature amplitude demodulation (QAM) and in which an analog signal (A) is demodulatable by means of single side band demodulation (SSB), **characterized in that** the modem comprises

    a) means (8) for performing a carrier frequency demodulation of the received signal $(X_R)$, with orthogonal carrier signals, generating in-phase $(x_I'(n))$ and quadrature $(x_Q'(n))$ components of the received signal,

b) means (71,51,61) for downsampling the in-phase $(x_I'(n))$ and quadrature $(x_Q'(n))$ components of the received signal, generating downsampled in-phase $(v_I''(n); \ p_I''(n); \ r_I''(n))$ and quadrature $(v_Q''(n); \ p_Q''(n); \ r_Q''(n))$ components,

c) means (6) for performing an SSB base demodulation of the downsampled in-phase $(r_I''(n))$ and quadrature $(r_Q''(n))$ components, and for generating a reconstructed analog signal (A),

d) means (7,5) for performing a singlecarrier quadrature amplitude base demodulation or a multicarrier Orthogonal Frequency Division Multiplex base demodulation of the downsampled in-phase $(v_I'''(n); \ p_I'''(n))$ and quadrature $(v_Q'''(n); \ p_Q'''(n))$ components, and for generating a reconstructed digital signal (D).

10. The modem according to claim 9, comprising means (72,52,62) for creating frequency-shifted in-phase components $(v_I'', p_I'', r_I'')$ and quadrature components $(v_Q'', p_Q'', r_Q'')$ by moving the downsampled in-phase $(v_I'''(n); \ p_I'''(n); \ r_I'''(n))$ and quadrature $(v_Q'''(n); \ p_Q'''(n); \ r_Q'''(n))$ components by a respective offset frequency $(f_A, f_O, f_Q)$.

**Patentansprüche**

1. Verfahren zum Modulieren einer Kombination aus analogen und digitalen Signalen, wobei ein digitales Datensignal (D) mittels Einträger-Quadraturamplitudenmodulation (QAM) oder Mehrträger-OFDM- (Orthogonal Frequency Division Multiplex) Modulation moduliert wird, und ein analoges Signal (A) mittels Einseitenband-Modulation (SSB) moduliert wird, **dadurch gekennzeichnet, dass** es die Schritte umfasst

    a) des Durchführens einer Einträger- oder Mehrträger-Basismodulation des digitalen Datensignals (D), wobei eine Inphasekomponente $(u_I;$ $o_I)$ und eine Quadraturkomponente $(u_Q; o_Q)$ des modulierten digitalen Signals erzeugt werden,

b) des Durchführens einer SSB-Basismodulation eines analogen Signals (A), wobei eine Inphasekomponente ($s_I$) und eine Quadraturkomponente ($s_Q$) des modulierten analogen Signals erzeugt werden,

c) des Upsamplings der Komponenten von wenigstens einem des modulierten digitalen und analogen Signals, wodurch in regelmäßigen Abständen abgetastete Inphase- ($u''_I; o''_I; s''_I$) und Quadratur- ($u''_Q; o''_Q; s''_Q$) Komponenten mit abgestimmten Sampling-Raten erzeugt werden,

d) des Addierens entsprechender Komponenten der in regelmäßigen Abständen abgetasteten Komponenten der modulierten digitalen und analogen Signale, wodurch eine addierte Inphasekomponente ($y'_I$) und eine addierte Quadraturkomponente ($y'_Q$) erzeugt werden, und

e) des Durchführens einer Trägerfrequenzmodulation der addierten Komponenten ($y'_I, y'_Q$), wobei die trägerfrequenzmodulierten Komponenten ($y_I, y_Q$), addiert werden, und das daraus resultierende Summensignal ($Y_T$) übertragen wird.

2. Verfahren nach Anspruch 1, wobei vor dem Erzeugen der der in regelmäßigen Abständen abgetasteten Komponenten frequenzversetzte Inphasekomponenten ($u''_I; o''_I; s''_I$) und Quadraturkomponenten ($u''_Q; o''_Q; s''_Q$) erstellt werden, indem die modulierten digitalen und analogen Signale zu einer jeweiligen Offsetfrequenz ($f_A, f_O, f_Q$) verschoben werden.

3. Verfahren nach Anspruch 2, wobei mehr als ein analoges Signal durch eine SSB-Basismodulation moduliert wird, und mehr als ein digitales Signal ($D_1$, $D_2$) durch eine Einträger-QAM- oder eine Mehrträger-OFDM-Basismodulation moduliert wird, und wobei die Inphasekomponenten und die Quadraturkomponenten jedes modulierten analogen und digitalen Signals zu einer Offsetfrequenz verschoben werden, die mit dem entsprechenden analogen oder digitalen Signal verbunden ist.

4. Verfahren zum Demodulieren einer Kombination aus analogen und digitalen Signalen, in dem ein empfangenes trägerfrequenzmoduliertes Signal ($X_R$) mittels einer Einträger-Quadraturamplitudenmodulation (QAM) oder einer Mehrträger-OFDM- (Orthogonal Frequency Division Multiplex) Modulation und mittels einer Einseitenband-Demodulation (SBB) demoduliert wird, **dadurch gekennzeichnet, dass** das Verfahren die Schritte umfasst

a) des Durchführens einer Trägerfrequenzdemodulation des empfangenen Signals ($X_R$) mit orthogonalen Trägersignalen, wobei Inphase- ($x'_I(n)$) und Quadratur- ($x'_{-Q}(n)$) Komponenten des empfangenen Signals erzeugt werden,

b) des Durchführens eines Downsamplings der Inphase- ($x'_I(n)$) und Quadratur- ($x'_{-Q}(n)$) Komponenten des empfangenen Signals, wodurch abwärts abgetastete (downsampled) Inphase-($v'''_I(n); p'''_I(n); r'''_I(n)$) und Quadratur-($v'''_Q(n); p'''_Q(n); r'''_Q(n)$) Komponenten erzeugt werden,

c) des Durchführens einer SSB-Basisdemodulation der abwärts abgetasteten (downsampled) Inphase- Inphase- ($r'''_I(n)$) und Quadratur-($r'''_Q(n)$) Komponenten des empfangenen Signals, wodurch ein rekonstruiertes analoges Signal (A) erzeugt wird, und

d) des Durchführens einer Einträger-Quadraturamplitudenbasisdemodulation oder einer Mehrträger-OFDM- (Orthogonal Frequency Division Multiplex) Basisdemodulation der abwärts abgetasteten (downsampled) Inphase-($v'''_I(n); p'''_I(n)$) und Quadratur- ($v'''_Q(n); p'''_Q(n)$) Komponenten des empfangenen Signals, wodurch ein rekonstruiertes digitales Signal (D) erzeugt wird.

5. Verfahren nach Anspruch 4, wobei die SSB-Basisdemodulation das Verschieben der abwärts abgetasteten (downsampled) Inphase- ($r'''_I(n)$) und Quadratur- ($r'''_Q(n)$) Komponenten um eine Offsetfrequenz ($f_A$) umfasst.

6. Modem zum Modulieren einer Kombination aus analogen und digitalen Signalen, wobei ein digitales Datensignal (D) mittels Mehrträger-OFDM-(Orthogonal Frequency Division Multiplex) Modulation oder mittels Einträger-Quadraturamplitudenmodulation (QAM) modulierbar ist, und ein analoges Signal (A) mittels Einseitenband-Modulation (SSB) modulierbar ist, **dadurch gekennzeichnet, dass** das Modem umfasst

a) Mittel (1, 3) zum Durchführen einer Einträger- oder Mehrträger-Quadraturamplitudenbasismodulation des digitalen Datensignals (D) und zum Erzeugen einer Inphasekomponente ($u_I; o_I$) und einer Quadraturkomponente ($u_Q; o_Q$) des modulierten digitalen Signals,

b) Mittel (2) zum Durchführen einer SSB-Basismodulation des analogen Signals (A) und zum Erzeugen einer Inphasekomponente ($s_I$) und einer Quadraturkomponente ($s_Q$) des modulierten analogen Signals,

c) Mittel (18, 28, 38) zum Upsampling der Komponenten von wenigstens einem von dem modulierten digitalen und analogen Signal und zum Erzeugen von in regelmäßigen Abständen abgetasteten Inphase- ($u'''_I; o'''_I; s'''_I$) und Quadratur- ($u'''_Q; o'''_Q; s'''_Q$) Komponenten mit abgestimmten Sampling-Raten,

d) Mittel (9) zum Addieren entsprechender Komponenten der in regelmäßigen Abständen abgetasteten Komponenten der modulierten digitalen und analogen Signale und zum Erzeugen einer addierter Inphasekomponente ($y'_I$) und einer addierten Quadraturkomponente ($y'_Q$),

e) Mittel (4) zum Durchführen einer Trägerfrequenzmodulation der addierten Komponenten ($y'_I$, $y'_Q$), zum Addieren der trägerfrequenzmodulierten Komponenten ($y_I$, $y_Q$) und zum Übertragen des daraus resultierenden Summensignals ($Y_T$).

7. Modem nach Anspruch 6, umfassend Mittel (16, 26, 36) zum Erstellen von frequenzversetzten Inphasekomponenten ($u''_I$; $o''_I$; $s''_I$) und Quadraturkomponenten ($u''_Q$; $o''_Q$; $s''_Q$), indem die modulierten digitalen und analogen Signale zu einer jeweiligen Offsetfrequenz ($f_A$, $f_O$, $f_Q$) verschoben werden.

8. Modem nach Anspruch 6, das mehr als ein Mittel (1, 3) zum Durchführen einer Einträger-QAM- oder einer Mehrträger-OFDM-Basismodulation zum Modulieren von mehr als einem digitalen Signal ($D_1$, $D_2$) umfasst und/oder mehr als ein Mittel (2) zum Durchführen einer SSB-Basismodulation zum Modulieren von mehr als einem analogen Signal (A) umfasst, und das für jedes modulierte analoge und digitale Signal ein Mittel (16, 26, 36) zum Erstellen von frequenzversetzten Inphasekomponenten und Quadraturkomponenten umfasst.

9. Modem zum Demodulieren einer Kombination aus analogen und digitalen Signalen, die als ein trägerfrequenzmoduliertes Signal ($X_R$) empfangen werden, wobei ein digitales Datensignal (D) mittels Mehrträger-OFDM- (Orthogonal Frequency Division Multiplex) Modulation oder mittels Einträger-Quadraturamplitudenmodulation (QAM) demodulierbar ist, und wobei ein analoges Signal (A) mittels Einseitenband-Demodulation (SBB) demodulierbar ist, **dadurch gekennzeichnet, dass** das Modem umfasst

a) Mittel (8) zum Durchführen einer Trägerfrequenzdemodulation des empfangenen Signals ($X_R$) mit orthogonalen Trägersignalen, wobei Inphase- ($x'_I(n)$) und Quadratur- ($x'_Q(n)$) Komponenten des empfangenen Signals erzeugt werden,

b) Mittel (71, 51, 61) zum Durchführen des Downsamplings der Inphase- ($x'_I(n)$) und Quadratur- ($x'_Q(n)$) Komponenten des empfangenen Signals, wodurch abwärts abgetastete (downsampled) Inphase- ($v'''_I(n)$; $p'''_I(n)$; $r'''_I(n)$) und Quadratur- ($v'''_Q(n)$; $p'''_Q(n)$; $r'''_Q(n)$) Komponenten erzeugt werden,

c) Mittel (6) zum Durchführen einer SSB-Basisdemodulation der abwärts abgetasteten (down-

sampled) Inphase- Inphase- ($r'''_I(n)$) und Quadratur- ($r'''_Q(n)$) Komponenten und zum Erzeugen eines rekonstruierten analogen Signals (A),

d) Mittel (7, 5) zum Durchführen einer Einträger-Quadraturamplitudenbasisdemodulation oder einer Mehrträger-OFDM- (Orthogonal Frequency Division Multiplex) Basisdemodulation der abwärts abgetasteten (downsampled) Inphase-($v'''_I(n)$; $p'''_I(n)$) und Quadratur- ($v'''_Q(n)$; $p'''_Q(n)$) Komponenten und zum Erzeugen eines rekonstruierten digitalen Signals (D).

10. Modem nach Anspruch 9, das Mittel (72, 52, 62) zum Erstellen von frequenzversetzten Inphasekomponenten ($v''_I$; $p''_I$; $r''_I$) und Quadraturkomponenten ($v''_Q$; $p''_Q$; $r''_Q$), indem die abwärts abgetasteten (downsampled) Inphase- ($v'''_I(n)$; $p'''_I(n)$) und Quadratur- ($v'''_Q(n)$; $p'''_Q(n)$) Komponenten um eine jeweilige Offsetfrequenz ($f_A$, $f_O$, $f_Q$) verschoben werden.

## Revendications

1. Procédé de modulation d'une combinaison de signaux analogiques et numériques, dans lequel un signal de données numérique (D) est modulé au moyen d'une modulation d'amplitude en quadrature (Quadrature Amplitude Modulation - QAM) à porteuse unique ou d'une modulation multiplexée par répartition en fréquences orthogonales (Orthogonal Frequency Division Multiplex Modulation - OFDM) à porteuse multiple et dans lequel un signal analogique (A) est modulée au moyen d'une modulation à bande latérale unique (Single Side Band - SSB), **caractérisé en ce que** le procédé comprend les étapes suivantes :

a) réalisation d'une modulation de base à porteuse unique ou multiple du signal de données numérique (D) et génération d'une composante en phase ($u_I$ ; $o_I$) et d'une composante en quadrature ($u_Q$ ; $o_Q$) du signal numérique modulé,

b) réalisation d'une modulation de base SSB du signal analogique (A) et génération d'une composante en phase ($s_I$) et d'une composante en quadrature ($s_Q$) du signal analogique modulé,

c) sur-échantillonnage des composantes d'au moins un des signaux modulés numériques et analogiques et génération de composantes équi-échantillonnées en phase ($u'''_I$ ; $o'''_I$ ; $s'''_I$) et en quadrature ($u'''_Q$ ; $o'''_Q$ ; $s'''_Q$) avec des taux d'échantillonnage ajustés,

d) ajout de composantes équi-échantillonnées correspondantes des signaux numériques et analogiques modulés et génération d'une composante en phase ajoutée ($y'_I$) et d'une composante en quadrature ajoutée ($y'_Q$), et

e) réalisation d'une modulation de fréquence porteuse des composantes ajoutées ($y'_I$, $y'_Q$), ajout des composantes modulées de la fréquence porteuse ($y_I$, $y_Q$) et transmission du signal de somme résultant ($Y_T$).

2. Procédé selon la revendication 1, dans lequel des composantes en phase ($u''_I$, $o''_I$, $s''_I$) et en quadrature ($u''_Q$, $o''_Q$, $s''_Q$) décalées en fréquence sont créées avant la génération des composantes équi-échantillonnées en déplaçant les signaux numériques et analogiques modulés d'une fréquence décalée respective ($f_A$, $f_o$, $f_Q$).

3. Procédé selon la revendication 2, dans lequel plus d'un signal analogique est modulé par une modulation de base SSB et/ou plus d'un signal numérique ($D_1$, $D_2$) est modulé par une modulation de base à porteuse unique QAM ou à porteuse multiple OFDM, et dans lequel les composantes en phase et les composante en quadrature de chaque signal modulé analogique et numérique sont déplacées d'une fréquence décalée associée au signal analogique ou numérique correspondant.

4. Procédé de démodulation d'une combinaison de signaux analogiques et numériques, dans lequel un signal modulé en fréquence porteuse reçu ($X_R$) est démodulé au moyen d'une modulation d'amplitude en quadrature (QAM) à porteuse unique ou d'une modulation multiplexée par répartition en fréquences orthogonales (OFDM) à porteuse multiple et au moyen d'une démodulation à bande latérale unique (SSB),
   **caractérisé en ce que** le procédé comprend les étapes suivantes :

   a) réalisation d'une démodulation de fréquence porteuse du signal reçu ($X_R$) avec des signaux de porteuse orthogonaux et génération de composantes en phase ($x'_I(n)$) et en quadrature ($x'_Q(n)$) du signal reçu,
   b) sous-échantillonnage des composantes en phase ($x'_I(n)$) et en quadrature ($x'_Q(n)$) du signal reçu et génération de composantes sous-échantillonnées en phase ($v'''_I(n)$ ; $p'''_I(n)$ ; $r'''_I(n)$) et en quadrature ($v'''_Q(n)$ ; $p'''_Q(n)$ ; $r'''_Q(n)$),
   c) réalisation d'une démodulation de base SSB des composantes sous-échantillonnées en phase ($r'''_I(n)$) et en quadrature ($r'''_Q(n)$) et génération d'un signal analogique reconstruit (A), et
   d) réalisation d'une démodulation de base d'amplitude en quadrature à porteuse unique ou d'une démodulation de base multiplexée par répartition en fréquences orthogonales (OFDM) à porteuse multiple des composantes sous-échantillonnées en phase ($v'''_I(n)$ ; $p'''_I(n)$) et en quadrature ($v'''_Q(n)$ ; $p'''_Q(n)$) et génération d'un signal numérique reconstruit (D).

5. Procédé selon la revendication 4, dans lequel la démodulation de base SSB comprend le déplacement des composantes sous-échantillonnées en phase ($r'''_I(n)$) et en quadrature ($r'''_Q(n)$) d'une fréquence décalée ($f_A$).

6. Modem de modulation d'une combinaison de signaux analogiques et numériques, dans lequel un signal de données numérique (D) est modulable au moyen d'une modulation multiplexée par répartition en fréquences orthogonales (OFDM) à porteuse multiple ou au moyen d'une modulation d'amplitude en quadrature (QAM) à porteuse unique et dans lequel un signal analogique (A) est modulable au moyen d'une modulation à bande latérale unique (SSB),
   **caractérisé en ce que** le modem comprend les éléments suivants :

   a) un moyen (1, 3) de réalisation d'une modulation de base d'amplitude en quadrature à porteuse unique ou multiple du signal de données numérique (D) et de génération d'une composante en phase ($u_I$ ; $o_I$) et d'une composante en quadrature ($u_Q$ ; $o_Q$) du signal numérique modulé,
   b) un moyen (2) de réalisation d'une modulation de base SSB du signal analogique (A) et de génération d'une composante en phase ($s_I$) et d'une composante en quadrature ($s_Q$) du signal analogique modulé,
   c) un moyen (18, 28, 38) de sur-échantillonnage des composantes d'au moins un des signaux modulés numériques et analogiques et de génération de composantes équi-échantillonnées en phase ($u'''_I$ ; $o'''_I$ ; $s'''_I$) et en quadrature ($u'''_Q$ ; $o'''_Q$ ; $s'''_Q$) avec des taux d'échantillonnage ajustés,
   d) un moyen (9) d'ajout de composantes équi-échantillonnées correspondantes des signaux numériques et analogiques modulés et de génération d'une composante en phase ajoutée ($y'_I$) et d'une composante en quadrature ajoutée ($Y'_Q$),
   e) un moyen (4) de réalisation d'une modulation de fréquence porteuse des composantes ajoutées ($y'_I$, $y'_Q$), d'ajout des composantes modulées de la fréquence porteuse ($y_I$, $y_Q$) et de transmission du signal de somme résultant ($Y_T$).

7. Modem selon la revendication 6, comprenant un moyen (16, 26, 36) de création de composantes en phase ($u''_I$, $o''_I$, $s''_I$) et de composantes en quadrature ($u''_Q$, $o''_Q$, $s''_Q$) décalées en fréquence en déplaçant les signaux numériques et analogiques modulés d'une fréquence décalée respective ($f_A$, $f_O$, $f_Q$).

**8.** Modem selon la revendication 6, comprenant plus d'un moyen (1, 3) de réalisation d'une modulation de base QAM à porteuse unique ou d'une modulation de base OFDM à porteuse multiple permettant de moduler plus d'un signal numérique ($D_1$, $D_2$) et/ou comprenant plus d'un moyen (2) de réalisation d'une modulation de base SSB permettant de moduler plus d'un signal analogique (A), et comprenant un moyen (16, 26, 36) de création de composantes en phase et en quadrature décalées en fréquence pour chaque signal analogique et numérique modulé.

**9.** Modem de démodulation d'une combinaison de signaux analogiques et numériques reçus sous forme d'un signal modulé à fréquence porteuse ($X_R$), dans lequel un signal de données numérique (D) est démodulable au moyen d'une démodulation multiplexée par répartition en fréquences orthogonales (OFDM) à porteuse multiple ou au moyen d'une démodulation d'amplitude en quadrature (QAM) à porteuse unique, et dans lequel un signal analogique (A) est démodulable au moyen d'une démodulation à bande latérale unique (SSB),
**caractérisé en ce que** le modem comprend les éléments suivants :

a) un moyen (8) de réalisation d'une démodulation de fréquence porteuse du signal reçu ($X_R$) avec des signaux de porteuse orthogonaux, permettant de générer des composantes en phase ($x'_I(n)$) et en quadrature ($x'_Q(n)$) du signal reçu,
b) un moyen (71, 51, 61) de sous-échantillonnage des composantes en phase ($x'_I(n)$) et en quadrature ($x'_Q(n)$) du signal reçu, permettant de générer des composantes sous-échantillonnées en phase ($v'''_I(n)$ ; $p'''_I(n)$ ; $r'''_I(n)$) et en quadrature ($v'''_Q(n)$ ; $p'''_Q(n)$ ; $r'''_Q(n)$),
c) un moyen (6) de réalisation d'une démodulation de base SSB des composantes sous-échantillonnées en phase ($r'''_I(n)$) et en quadrature ($r'''_Q(n)$) et de génération d'un signal analogique reconstruit (A),
d) un moyen (7, 5) de réalisation d'une démodulation de base d'amplitude en quadrature à porteuse unique ou d'une démodulation de base multiplexée par répartition en fréquences orthogonales (OFDM) à porteuse multiple des composantes sous-échantillonnées en phase ($v'''_I(n)$ ; $p'''_I(n)$) et en quadrature ($v'''_Q(n)$ ; $p'''_Q(n)$) et de génération d'un signal numérique reconstruit (D).

**10.** Modem selon la revendication 9, comprenant un moyen (72, 52, 62) de création de composantes en phase ($v''_I$, $p''_I$, $r''_I$) et de composantes en quadrature ($v''_Q$, $p''_Q$, $r''_Q$) décalées en fréquence en déplaçant les composantes sous-échantillonnées en phase ($v'''_I(n)$ ; $p'''_I(n)$ ; $r'''_I(n)$) et en quadrature ($V'''_Q(n)$ ; $p'''_Q(n)$ ; $r'''_Q(n)$) d'une fréquence décalée respective ($f_A$, $f_0$, $f_Q$).

OFDM data

analog input

QAM data

$f_c + f_{O1}$

$B_{01}$

$f_c + f_A$

$B_A$

$f_c + f_{O2}$

$B_{02}$

$f_c + f_Q$

$B_Q$

# Fig. 1

**Fig. 2**

**Fig. 3**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1164762 A

**Non-patent literature cited in the description**

- **PHILIP F. PANTER.** Modulation, Noise, and Spectral Analysis. McGraw-Hill, 1965, 180-196
- **JOHN G. PROAKIS.** Digital Communication. Mc-Graw-Hill, 1983, 1 83-190